# EUROPÄISCHE PATENTANMELDUNG

(11) **EP 0 892 255 A1**
(43) Veröffentlichungstag der Anmeldung: **20.01.1999**
(21) Anmeldenummer: 98112935.6
(22) Anmeldetag: 11.07.1998
(51) Int. Cl.: G01G 13/16, B65D 88/66

(54) **Vorrichtung zum Fördern und Wiegen von Schüttgütern**

(30) Priorität: 17.07.1997 DE 19730626
(71) Anmelder: Filterwerk Mann & Hummel GmbH, 71638 Ludwigsburg (DE)
(72) Erfinder: Kemmler, Dieter, 71642 Ludwigsburg (DE); Poller, Stephan, Dr., 71636 Ludwigsburg (DE)
(74) Vertreter: Voth, Gerhard, Dipl.-Ing.

(57) **Zusammenfassung**

Beschrieben wird eine Vorrichtung zum Fördern und/oder Wiegen von Schüttgütern, wobei die Vorrichtung einen flexiblen Behälter (9), einen Deckel (2), einen Einlaß (3), einen Auslaß (16), ein Absperrorgan (12) und wenigstens eine Wägezelle (6) aufweist, wobei der flexible Behälter (9) wenigstens eine Verstärkung (8) umfaßt.

## Beschreibung

Derartige Vorrichtungen sind in der Verfahrenstechnik bekannt, insbesondere bei der Lagerung, Förderung, Dosierung oder Wägung von pulvrigen Schüttgütern. Bei der Lagerung in Silos oder Vorratsbehältern gestaltet sich der Austrag von Schüttgütern aus dem Silo zur Waage oder zum Behälter schwierig. Das pulvrige Schüttgut bildet Brücken und fließt nicht mehr aus dem Behälter aus, oder es verstopft den Ausgang, so daß der Austrag aus dem Behälter nicht mehr gewährleistet ist. Zur Unterstützung des Austrags bieten sich verschiedene Austragshilfen an. Dies sind beispielsweise Behälter oder Silos mit einem festen Boden, wobei der Boden flexibel am zylindrischen Teil befestigt ist. Durch einen Unwuchtrüttler wird der Austrag aus dem Silo oder dem Behälter unterstützt.

Weiter sind am Boden rotierende Austragshilfen bekannt, die das Produkt in die jeweiligen Ausgangsöffnungen hineindrücken.

Ebenfalls bekannt ist die Belüftung des Bodens durch Düsen oder Luftkissen.

Des weiteren ist ein flexibler Boden bekannt, der über einen Rüttler in Schwingung versetzt wird, so daß das Produkt leichter ausfließen kann.

Die Förderung des Produktes vom oder zum Behälter oder Silo kann mittels Druck- oder Saugförderung geschehen. Je nach Material, Streckenführung und Streckenlänge wird die jeweilige Förderart gewählt. Soll das Schüttgut gewogen werden, so muß in den Wiegebehälter dosiert werden. Dafür werden bereits Dosierrinnen oder Dosierschnecken eingesetzt.

Beim Verwiegen und Fördern in einem Schritt werden Saugwaagen eingesetzt. Dabei wird durch einen angelegten Unterdruck in einem Behälter Material über eine längere Strecke hin in diesen Behälter gesaugt. Durch spezielle Ventile, die in der Saugförderleitung eingebaut sind, kann aus mehreren Quellen Material gefördert werden und es ist ein sehr exaktes Abschalten des Produktstromes möglich, so daß ein vorgegebenes Gewicht im Behälter eingehalten werden kann. Zum Bestimmen des Gewichts des geförderten Materials wird der Behälter mit Wägezellen gewogen.

Für diese Saugwaagen haben sich bei schlecht fließenden pulvrigen Materialien zum einen eine Auskleidung mit luftdurchlässigem Material bewährt. Dabei wird der komplette Behälter mit dem luftdurchlässigen Material ausgekleidet und der Austrag des fertig verwogenen Materials aus dem Wiegebehälter durch eine Belüftung über das luftdurchlässige Material unterstützt. Zum anderen sind auch flexible Innenbehälter aus Gummi bekannt, die zur Unterstützung des Austrags des Materials aus dem Wiegebehälter durch eine im Kreis geführte Luftströmung bewegt werden.

Nachteil des Wiegebehälters mit einer luftdurchlässigen Auskleidung ist, daß die Montage- und Herstellkosten sehr hoch sind, da ein innenliegender Inliner zusätzlich angefertigt werden muß und der äußere Behälter so gestaltet sein muß, daß er den innenliegenden Behälter aufnehmen kann. Außerdem ist die Wartung sehr schwierig, da der komplette äußere Behälter demontiert werden muß, um die luftdurchlässige Auskleidung zu ersetzen. Weiterhin ist die luftdurchlässige Auskleidung einem hohen Verschleiß unterworfen, da das geförderte Material direkt über diese Auskleidung hinüberläuft.

Nachteil des Wiegebehälters mit der flexiblen Auskleidung ist, daß der apparative und steuerungstechnische Aufwand erheblich ist. Es muß ein zusätzliches Gebläse installiert werden und eine Ringleitung zum Waagenbehälter gezogen werden. Diese Teile müssen auch steuerungstechnisch angeschlossen werden. Weiterhin ist auch der flexible Innenbehälter einem Verschleiß unterworfen, da er sich sehr stark innerhalb des Wiegebehälters bewegt und so leicht an den Wiegenkanten aufbrechen kann.

Es ist somit Aufgabe der vorliegenden Erfindung, eine Vorrichtung der eingangs genannten Art dahingehend zu verbessern, daß eine Vorrichtung geschaffen wird, die die vorgenannten Nachteile vermeidet, kostengünstig ist und auch schwerfließende Materialien verarbeitet.

Erfindungsgemäß wird die Aufgabe dadurch gelöst, daß eine Vorrichtung einen flexiblen Behälter, einen Deckel, einen Einlaß, einen Auslaß, ein Absperrorgan und wenigstens eine Wägezelle aufweist, wobei der flexible Behälter wenigstens eine Verstärkung umfaßt. Dies ist insbesondere bei der Verarbeitung von pulvrigen Schüttgütern von Vorteil, da der flexible Behälter die für den Weitertransport des Schüttgutes hinderliche Brückenbildung vermeidet, da die flexible Hülle des Behälters ziemlich beweglich ist. Damit die Ausdehnungsfähigkeit der Hülle des Behälters nicht zu Beschädigungen derselben führt, ist eine Verstärkung in diese Hülle integriert, die geeigneterweise ringförmig um die Hülle angeordnet ist und deren radiale Beweglichkeit begrenzt. Ebenfalls wird dadurch eine einfache Montage und Wartung gewährleistet. Zum anderen können auch schwerfließende pulvrige Materialien restlos entfernt werden, da der Behälter selbst flexibel und beweglich ist.

Eine vorteilhafte Weiterbildung der Erfindung sieht vor, daß der flexible Behälter aus Kunststoff oder Kautschuk besteht. Dies garantiert einerseits die erforderliche Flexibilität, zum anderen ist ein Behälter aus diesen Materialien billiger herzustellen in, Vergleich beispielsweise zu einer Blechkonstruktion, er ist auch leichter, was zu einer Gewichtsersparnis führt, die wiederum zu einer kostengünstigeren Gesamtkonstruktion führt.

In einer anderen vorteilhaften Weiterbildung ist vorgesehen, daß der flexible Behälter mittels angeklebter oder anvulkanisierter Konusabschnitte verstärkt ist. Diese Verstärkungen sorgen für eine entsprechende Festigkeit des Behälters. Sie garantieren zum Beispiel eine gewisse Beaufschlagung des Behältnisses mit Über- bzw. Unterdruck. Der flexible Behälter weist einen oder mehrere Unterstützungskonen auf, die bei Unter- oder Überdruck das Zusammenziehen bzw. das Ausbeulen des Behälters vermeiden. Durch das Ankleben bzw. Anvulkanisieren sind die Verstärkungen an der jeweils vorgesehenen Stelle fixiert, was insbesondere bei sich verjüngenden Geometrien von Vorteil ist, da die Verstärkungsringe sonst verrutschen könnten. Auf diese Weise ist ein definierter Abstand von Verstärkungsring zu Verstärkungsring einstellbar.

Eine vorteilhafte Weiterbildung der Erfindung sieht vor, daß die Vorrichtung druckdicht ist. Von Vorteil hierbei ist, daß der Behälter sowohl mit Über- als auch mit Unterdruck beaufschlagt werden kann.

In einer anderen vorteilhaften Weiterbildung ist vorgesehen, daß die Vorrichtung einen Filter aufweist, insbesondere im Deckel der Vorrichtung, was Vorteile hinsichtlich der Herstellung als auch der Wartung darstellt. Ein Filter im System läßt vorteilhafterweise eine Expansionsströmung zu, bei der das zu fördernde Gut verlustfrei im System verbleibt, ohne in mit der Umgebung in Kontakt zu kommen.

Weiter kann man erfindungsgemäß vorsehen, daß die Öffnung für den Filter exzentrisch im Deckel angebracht ist. Dies ist vorteilhaft, da der Filtereinsatz, einen entsprechenden Schüttungswinkel vorausgesetzt, in den Behälter hineinragen kann und somit die Außenmaße verringert.

Eine vorteilhafte Weiterbildung der Erfindung sieht vor, daß an einer oder mehreren der konischen Verstärkungen ein oder mehrere Rüttler, die mit einem Motor oder pneumatisch betrieben werden, angebracht sind, so daß die Rüttelbewegung zur Unterstützung des Materialausflusses des Schüttgutes sich auf den flexiblen Behälter überträgt.

In einer anderen vorteilhaften Weiterbildung ist vorgesehen, daß der flexible Behälter zusätzlich über separat angebrachte Stutzen belüftet wird, so daß das Ausfließen des Materials aus dem Wiegebehälter unterstützt wird. Zum Beispiel könnte die Klappe am Ausgang des Wiegebehälters zusätzlich eine Belüftungseinrichtung aufweisen, die das Ausfließen des Materials aus dein Behälter unterstützt. In der Gesamtbeschau ergibt sich eine wesentlich kostengünstigere Gestaltung des Wiegebehälters, verglichen mit dem Stand der Technik.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen näher erläutert. Es zeigt:
- Figur 1: einen Schnitt durch eine Vorrichtung zum Fördern und Wiegen
- Figur 2: eine Variante des Ausführungsbeispiels aus Fig. 1 mit exzentrisch angeordnetem Filter

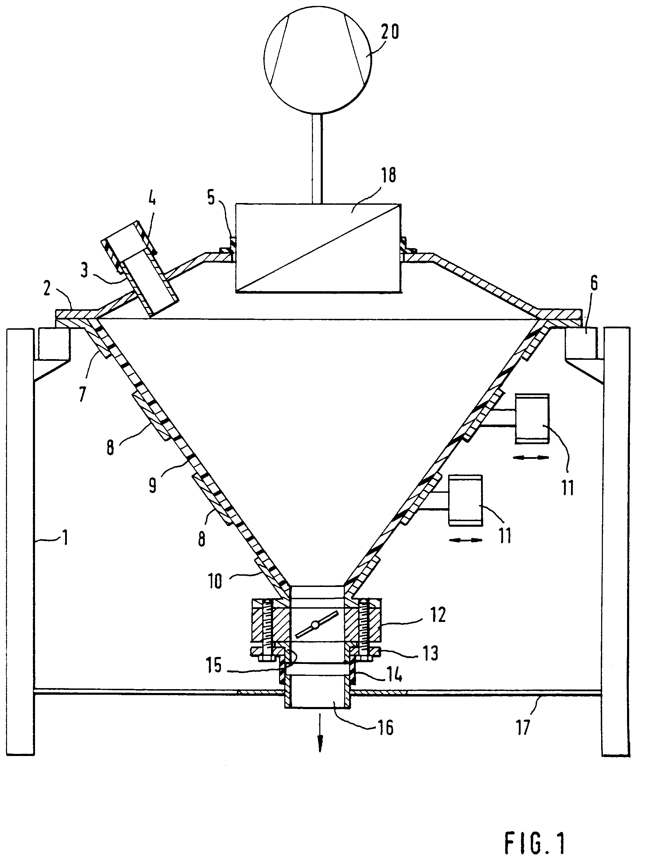

Figur 1 zeigt einen Wiegebehälter mit flexiblem Konus. Der flexible Behälter (9) besteht aus einem Konus aus flexiblem Kunststoff oder Kautschuk, der an der oberen Seite an eine Halterung (7) angeklebt oder anvulkanisiert ist. An der unteren Seite wird ebenfalls eine Halterung (10) anvulkanisiert oder angeklebt. Damit der flexible Wiegebehälter an der unteren Seite verschlossen werden kann, wird an der unteren Halterung (10) ein Absperrorgan (12) angeflanscht, an das wiederum über einen Flansch (13) ein Stutzen (15) angeflanscht ist. Dieser Stutzen wird mit einer flexiblen Manschette (14) mit dem Ausgangsstutzen (16) verbunden. Über diese flexible Manschette ist der Wiegebehälter zum einen staubdicht und zum anderen weiter flexibel mit dem restlichen Rahmen verbunden. Der Ausgangsstutzen (16) wird über eine untere Montageplatte (17) mit dem Rahmen (1) verbunden.

Zum Verwiegen des Behälters wird die obere Halterung (7) auf Wägezellen (6) gestellt. Diese Wägezellen (6) stehen wiederum auf dem äußeren Rahmen (1). Den Abschluß des Behälters bildet der Deckel (2), der auf der oberen Halterung (7) befestigt ist. In dem Deckel ist eine Aufnahme für einen Filter (18) und für den Einfüllstutzen (3). Der Einfüllstutzen ist mit einer flexiblen Manschette (4) mit weiteren Befüllrohren verbunden.

Über ein Gebläse (20),das an den Filter (18) angeschlossen ist, wird im Innenraum ein Unterdruck erzeugt. Bei verschlossener Klappe (12) wird der Innendruck über den Stutzen an die Rohrleitung weitergegeben. Dadurch wird aus der Rohrleitung das zu fördernde Material angesaugt. Gleichzeitig wird über die Meßzellen (6) das schon im Behälter befindliche Material gewogen.

Da der Behälter (9) aus einem flexiblen Material wie z. B. Kunststoff oder Kautschuk besteht, kann er sich bei dem angelegten Unterdruck zusammenziehen. Da dies das Behältervolumen zu stark verkleinern würde, sind zur Unterstützung Verstärkungen (8) an den Behälter (9) angeklebt oder anvulkanisiert. Gleichzeitig können diese Verstärkungen (8), die vorteilhaft konisch ausgebildet sind, an einen motorisch oder pneumatisch betriebenen Rüttler (11) angeschlossen werden. Durch die von den, Rüttler (11) hervorgerufenen Vibrationsbewegungen, die sich auf den flexiblen Behälter (9) übertragen, wird das Austragen des Materials aus dem Behälter unterstützt. So werden auch schwerfließende pulvrige Schüttgüter aus dem Behälter ausgetragen. Der Behälter wird dabei restlos entleert.

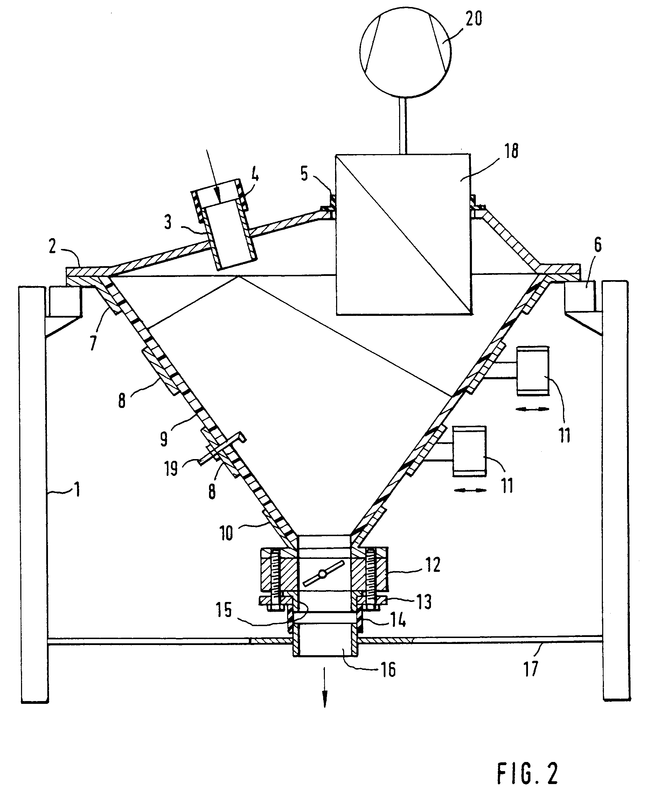

In Figur 2 wird eine Alternative des Wiegebehälters aus Figur 1 gezeigt. Der flexible Behälter (9) besteht aus einem Konus aus flexiblem Kunststoff oder Kautschuk, der an der oberen Seite an eine Halterung (7) angeklebt oder anvulkanisiert ist. An der unteren Seite ist ebenfalls eine Halterung (10) anvulkanisiert oder angeklebt. An der unteren Halterung (10) ist ein Absperrorgan (12) angeflanscht, an das wiederum über einen Flansch (13) ein Stutzen (15) angeflanscht ist. Dieser Stutzen ist mit einer flexiblen Manschette (14) mit dem Ausgangsstutzen (16) verbunden. Über diese flexible Manschette ist der Wiegebehälter staubdicht und flexibel mit dem restlichen Rahmen verbunden. Der Ausgangsstutzen (16) wird über eine Montageplatte (17) mit dem Rahmen (1) verbunden.
Zum Verwiegen des Behälters wird die obere Halterung (7) auf Wägezellen (6) gestellt. Diese Wägezellen (6) stehen auf dem äußeren Rahmen (1). Den Abschluß des Behälters bildet der Deckel (2), der auf der oberen Halterung (7) befestigt ist. In dem Deckel ist eine Aufnahme für einen Filter (18) und für den Einfüllstutzen (3). Der Einfüllstutzen ist mit einer flexiblen Manschette (4) mit weiteren Befüllrohren verbunden. Über ein Gebläse (20), das an den Filter (18) angeschlossen ist, wird im Innenraum ein Unterdruck erzeugt. Bei verschlossener Klappe (12) wird der Innendruck über den Stutzen an die Rohrleitung weitergegeben. Dadurch wird aus der Rohrleitung das zu fördernde Material angesaugt. Gleichzeitig wird über die Meßzellen (6) das schon im Behälter befindliche Material gewogen. Da der Behälter (9) aus einem flexiblen Material wie z. B. Kunststoff oder Kautschuk besteht, könnte er sich beim angelegten Unterdruck zusammenziehen. Da dies das Behältervolumen stark verkleinert, sind zur Unterstützung Verstärkungen (8) an den Behälter (9) angeklebt oder anvulkanisiert. Gleichzeitig können diese Verstärkungen (8), die konisch ausgebildet sind, an einen motorische oder pneumatisch betriebenen Rüttler (11) angeschlossen sein. Durch die von dem Rüttler (11) hervorgerufenen Vibrationsbewegungen, die sich auf dem flexiblen Behälter (9) übertragen, wird das Austragen des Materials aus dem Behälter unterstützt. So werden auch schwerfließende pulvrige Schüttgüter aus dem Behälter ausgetragen. Der Behälter wird dabei restlos entleert. In dieser Ausführungsform ist der Filterstutzen (5) exzentrisch im Deckel angebracht. Der Filter (18) befindet sich also nicht zentrisch über der Mitte des Behälters (9). Dadurch kann der Filter mit seinen Filtertaschen weiter in den flexiblen Behälter hineinragen. Schematisch ist dazu das eingefüllte Material mit seinem spezifischen Schüttwinkel eingezeichnet.

Weiterhin ist auch hier eine Belüftungsvorrichtung (19) vorgesehen. Dabei wird ein Stutzen, ähnlich einem Ventil, direkt in den Gummi einvulkanisiert oder eingeklebt. Er befindet sich gleichfalls in der Verstärkung (8). Über diesen Stutzen kann in den Behälter Luft eingegeben werden, die das Ausfließen des Materials unterstützt. Weiterhin kann dieser Wiegebehälter (9) auch mittels Überdruck befüllt werden.

## Patentansprüche

1. Vorrichtung zum Fördern und/oder Wiegen von Schüttgütern, wobei die Vorrichtung einen flexiblen Behälter (9), einen Deckel (2), einen Einlaß (3), einen Auslaß (16), ein Absperrorgan (12) und wenigstens eine Wägezelle (6) aufweist, wobei der flexible Behälter (9) wenigstens eine Verstärkung (8) umfaßt.

2. Vorrichtung nach Anspruch 1, dadurch gekennzeichnet, daß der flexible Behälter (9) aus Kunststoff oder Kautschuk besteht.

3. Vorrichtung nach einem oder mehreren der vorgenannten Ansprüche, dadurch gekennzeichnet, daß der flexible Behälter (9) mittels angeklebter oder anvulkanisierter Verstärkungen (8) versehen ist.

4. Vorrichtung nach einem oder mehreren der vorgenannten Ansprüche, dadurch gekennzeichnet, daß die Vorrichtung druckdicht ist.

5. Vorrichtung nach einem oder mehreren der vorgenannten Ansprüche, dadurch gekennzeichnet, daß die Vorrichtung einen Filter (5) aufweist.

6. Vorrichtung nach einem oder mehreren der vorgenannten Ansprüche, dadurch gekennzeichnet, daß der Filter (18) direkt auf den Deckel montiert ist, so daß seine Filtertaschen in den Behälter hineinragen.

7. Vorrichtung nach einem oder mehreren der vorgenannten Ansprüche, dadurch gekennzeichnet, daß die Öffnung für den Filter (5) exzentrisch im Deckel (2) angebracht ist.

8. Vorrichtung nach einem oder mehreren der vorgenannten Ansprüche, dadurch gekennzeichnet, daß an wenigstens einer Verstärkung (8) wenigstens ein Rüttler (11), der mit einem Motor oder pneumatisch betreibbar ist, angebracht ist.

9. Vorrichtung nach einem oder mehreren der vorgenannten Ansprüche, dadurch gekennzeichnet, daß der flexible Behälter (9) wenigstens ein Belüftungselement (19) aufweist, über die der flexible Behälter (9) belüftbar ist.

10. Wiegebehälter, umfassend einen Rahmen (1), in dem eine Vorrichtung nach einem oder mehreren der vorgenannten Ansprüche zum Einsatz kommt.
